Europäisches Patentamt

European Patent Office

Office européen des brevets

(19)

(11) Publication number: **0 009 371**
**B1**

# EUROPEAN PATENT SPECIFICATION

(12)

(45) Date of publication of patent specification: 07.07.82

(21) Application number: 79301880.5

(22) Date of filing: 13.09.79

(51) Int. Cl.³: **C 09 K 3/12**, C 09 D 5/34, C 08 L 95/00, C 08 L 21/02 //(C08L95/00, 21/02), (C08L21/02, 95/00)

(54) The sealing of leaks in tanks and the like.

(30) Priority: 15.09.78 ZA 783081

(43) Date of publication of application:
02.04.80 Bulletin 80/7

(45) Publication of the grant of the patent:
07.07.82 Bulletin 82/27

(84) Designated Contracting States:
AT BE CH DE FR GB IT LU NL SE

(56) References cited:
CH - A - 177 570
GB - A - 1 167 265
US - A - 4 104 211

(73) Proprietor: Grobler, Johannes Hermanus
668 Main Pretoria Road
Wynberg Johannesburg (ZA)

(72) Inventor: Grobler, Johannes Hermanus
668 Main Pretoria Road
Wynberg Johannesburg (ZA)

(74) Representative: Roberts, Peter William et al,
Marks & Clerk Alpha Tower ATV Centre
Birmingham B1 1TT (GB)

Courier Press, Leamington Spa, England.

## The sealing of leaks in tanks and the like

This invention relates to the sealing of leaks in tanks and the like.

A wide variety of sealing materials and methods for using these has been previously proposed. Known sealants include elastomers such as silicones and polysulphides and also bituminous materials, which term includes, for the purposes of this specification, tars and pitches.

Apart from the sealing materials provided and used in sheet form, many are supplied as settable liquid materials intended for surface application. After application they set to form a flexible film. Included in this latter category are many bituminous products. One known such product comprises a bitumen/rubber latex emulsion. The latex adds a degree of elasticity to the formed bituminous film. For example, British Patent No. 1,167,265 discloses that an insulating layer can be produced on a support, such as on concrete or a wall made of brick, stone or natural rock, by simultaneously spraying onto the support an emulsifying agent and a mixture of a bitumen emulsion and a rubber latex. In addition, it is known from U.S. Patent No. 4,104,211 to seal leaks in gas transmission or distribution pipes by means of a sealant composition comprising an emulsion of bitumen, a rubber latex and an emulsifier, in which the emulsion also contains a flow modifier.

Other sealants are intended to be impregnated in porous materials. One such sealant comprises a siliconate (a water soluble silicone material) dispersed in rubber latex and is described in detail in UK Patent No. 848,352. Although this material is said to be capable of being added to cementitious mixes to provide a plaster which is capable of withstanding hydrostatic pressure, nevertheless the material when impregnated, according to the instructions, into a porous structure has not been found to be capable of sealing the concrete against water under any substantial pressure. The material when so used is capable only of sealing the porous structure against "rising damp".

It is also known to impregnate various sheet materials such as asbestos cement sheets, paper and hessian with bituminous material during the manufacture thereof.

It is an object of the present invention to provide a method for sealing a fluid passage and particularly a water passage which may be used even where water is flowing through a leak in the passage in substantial quantities and/or under substantial pressure.

According to the invention, there is provided a method of sealing a fluid passage by introducing into the passage in the presence of a coagulating agent a sealing composition comprising a rubber latex and a bituminous material, characterised in that a second passage is formed which intersects the fluid passage and the sealing composition is introduced into the fluid passage through the second passage in sufficient quantity to form an aggregate which effectively seals the fluid passage in the presence of the coagulating agent.

The term "passage" used in this specification is intended to apply broadly to any passage through which a fluid under pressure can pass. Thus it includes a hole or crack in a wall through which water can flow or seep. Porous concrete or brickwork would include a multiplicity of "passages". Furthermore a "passage" would exist between the lining and the rock face of a mine shaft where water could pass therebetween. A fissure or fault in a rock through which water could flow would also be a "passage".

The method may be applied where there is water, even running water, in the fluid passage when the composition is introduced.

Preferably the second passage intersects the fluid passage upstream of an opening in the fluid passage whereby fluid flowing through the fluid passage carries the composition along the fluid passage via the intersection to the opening, the composition coagulating in or behind said opening and thereby sealing it. This fluid may be in a stream which is leaking through the fluid passage or it may be pumped by the operator into the fluid passage. It has been found that leaks of substantial dimensions can be sealed even if fluid is pouring out of the leak at a high velocity and volume.

The invention is further discussed with reference to the accompanying drawings in which:—

Figure 1 is a somewhat schematic cross-sectional view of a concrete slab which represents the wall or floor or roof of a building or reservoir;

Figure 2 is a similar schematic cross-sectional view of the lining of a mine shaft.

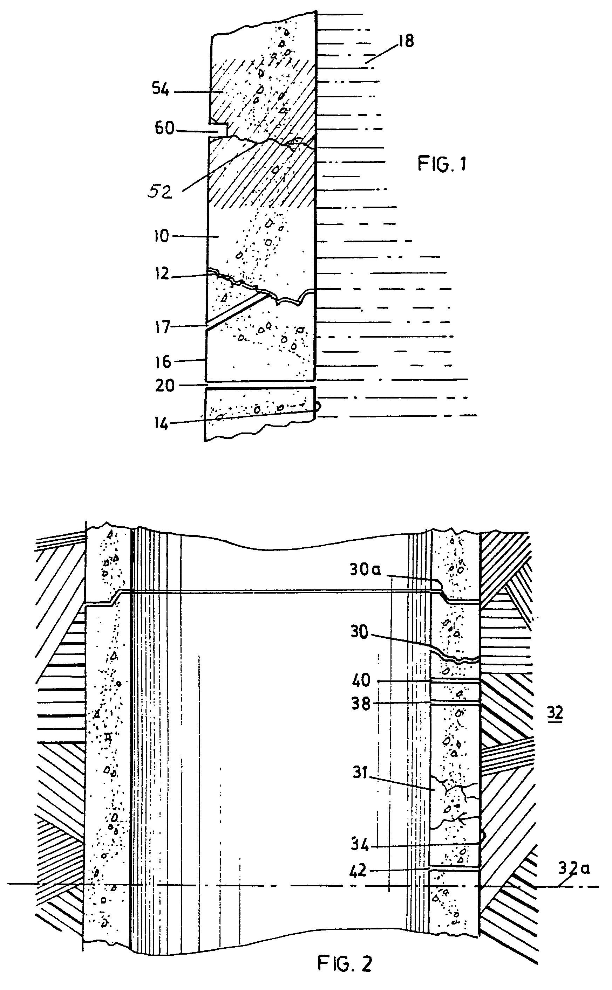

In Figure 1 the slab 10 is shown vertical but could equally well be horizontal. A crack 12 has occurred in the slab and this has widened to the extent that water at the outer face 14 of the slab is passing through the crack and emerging at the inner face 16 in a jet. The medium 18 represents saturated soil or water.

To seal the crack 12 a passage 17 is drilled from the inner face 16 to intersect the crack. An injector, preferably of the type described in the applicant's British Patent No. 1,526,003 is inserted in the passage 17 and a quantity of bitumen/rubber latex emulsion is injected into the crack together with a suitable coagulating agent. A suitable emulsion is marketed as a surface-applied sealant under the name Mulseal by Expandite Ltd. This emulsion contains about ten per cent of latex. The water emerging from the crack at the face 16 becomes discoloured by the emulsion and within a very short time ceases to flow.

If there are extensive leaks in the slab, one or more further passages 20 may be drilled right through the slab and the same sealant injected directly into the water outside the slab. Again the water emerging from the crack becomes discoloured and after some time the leaks are sealed indicating that the water carries the sealant into the cracks and other faults.

Referring again to Figure 1, the slab 10 is frequently found to have developed fine cracks 52 and porosity 54 so that water under pressure at the outer face 14 seeps through the slab to the inner face 16. Passages 60 can then be drilled in the region of the cracks and porosity and the same sealant injected through the passages to seal the cracks and porosity.

Referring now to Figure 2 water was leaking extensively through cracks 30 and joints 30a in the concrete lining 31 of a mine shaft. The largest of the cracks was about thirty centimetres wide and two metres long and the water was emerging in a spout at a rate estimated to have been at least 1000 litres per minute. Investigation showed that water was penetrating through a fault in the surrounding rock 32 at a level 32a below the area where the leaks had occurred and was passing upwardly between the outer face of the lining and the face 34 of the shaft. Because of the considerable flow of water it was decided first to seal the large cracks. This was achieved by drilling two passages 38 and 40 through the lining 31 below each large crack. The same sealant as previously described but with the proportion of latex doubled was injected into the water through the lower passage 38 and an accelerator in the form of dilute hydrochloric acid was injected through the upper passage 40, i.e. downstream of the point where the sealant was injected. In this way the large cracks were sealed. The flow of accelerator must be carefully controlled as it will otherwise cause the sealant to block the passages 38 and 40 before the cracks are sealed. A further passage 42 was then drilled through the lining wall below the faulty area and the sealant injected into the water. Quite soon substantially all of the leaks were sealed.

In many cases where a crack or hole is so large that the inside is visible, after sealing the sealant can be seen to have formed a coherent elastic plug. Furthermore still liquid sealant and coherent strings of sealant may be seen emerging from some of the cracks and pores at the inner face indicating that the sealing penetrates right through the cracks and pores. It is not at the present time entirely clear how the plug is formed but it would seem that the emulsion becomes susceptible to coagulation once dispersed in the water but coagulation is slow until the emulsified particles enter the passages or the accelerator is introduced. Where necessary the coagulation is accelerated by the hydrochloric acid as too much sealant might otherwise be lost if the flow of water is too great.

It should be realised that in many cases the injection pressure is of a high order. Injection pressures up to 250 kg/cm² have been used by the applicant. In the mine a water pressure of about 60 kg/cm² and an injection pressure of 150 kg/cm² were observed. When injecting the sealant into fine cracks and pores, injection pressures of up to 250 kg/cm² have been used. It is possible that the use of high pressure ensures that sealant continues to be driven into the pores and cracks even after coagulation commences so that the pores and cracks are saturated with sealant. This seems to be borne out by the fact that pure natural latex, which has been used by the applicant, appears to form a film at the entrances to fine cracks and pores when injected under very little or no pressure. Even moderate pressure causes this film to be broken. There seems to be no evidence of such a film occurring when the bitumen/latex emulsion is used. The latter furthermore has the advantage that much less sealant need be used before the leaks are sealed. This is possibly done to the presence of the bitumen which may increase the rate of coagulation particularly once the sealant has entered the pores and cracks. Usually the injection pressure is relatively low at the commencement of the operation but there is a sudden rise of the injection pressure when sealing is effected. In any case injection is not stopped until the injection pressure is well above that of the water or other fluid leaking. If the above suggestions are correct and since the coagulated sealant has considerable elasticity this would account for the fact that the plugs formed in all cases are able to accommodate considerable movement in cracks and faults while still preventing the passage of water and that once properly sealed by the method of the invention no cracks or other passages have subsequently developed leaks.

In many instances leaks occurring at considerable distances from an injection point have been sealed. Furthermore, surprisingly, some of these leaks have dried up days after the area originally sealed was injected. It would therefore appear that the emulsion remains dispersed for a considerable period and that coagulation is accelerated once the liquid carrying the emulsion enters a passage. As a result of the above observations the applicant has found it advantageous to judge the amount of sealant required to effect sealing in particular cases where the water present was limited at the time of the operation. The injecting of sealant is stopped before the above mentioned sharp rise in injection pressure takes place, and water is then injected into the affected zones. This procedure has had a remarkable effect in obtaining an even spread of sealant over an affected zone and, incidentally, in reducing the amount of sealant required.

## Claims

1. A method of sealing a fluid passage by introducing into the passage in the presence of a coagulating agent a sealing composition comprising a rubber latex and a bituminous material, characterised in that a second passage (17) is formed which intersects the fluid passage (12) and the sealing composition is introduced into the fluid passage (12) through the second passage (17) in sufficient quantity to form an aggregate which effectively seals the fluid passage (12) in the presence of the coagulating agent.

2. A method as claimed in Claim 1, characterised in that the second passage (17) intersects the fluid passage (12) upstream of an opening in the fluid passage (12) whereby fluid flowing through the fluid passage (12) carries the composition along the fluid passage (12) via the intersection to the opening, the composition coagulating in or behind said opening and thereby sealing it.

3. A method as claimed in Claim 1 or Claim 2, characterised in that the composition is introduced into the fluid passage (12) under a pressure of at least 15 kg/cm² (1,4715 MPa).

## Revendications

1. Procédé pour étancher un passage pour fluide grâce à l'introduction dans le passage d'un composé d'étanchéité comprenant un latex de caoutchouc et une substance bitumineuse, en présence d'un agent coagulant, caractérisé en ce qu'on perce un second passage (17) qui intersecte le passage (12) du fluide et on introduit le composé d'étanchéité dans le passage (12) du fluide, à travers le second passage (17), en une quantité suffisante pour former un aggrégat qui obture de façon efficace le passage (12) du fluide en présence de l'agent coagulant.

2. Procédé selon la revendication 1, caractérisé en ce que le second passage (17) intersecte le passage (12) du fluide en amount d'une ouverture dans le passage (12), grâce à quoi le fluide circulant à travers le passage (12) du fluide entraîne le composé le long dudit passage (12) par l'intermédiaire de l'intersection jusqu'à l'ouverture le composé coagulant dans ou derrière ladite ouverture et l'obturant de ce fait de façon étanche.

3. Procédé selon la revendication 1 ou la revendication 2, caractérisé en ce que le composé est introduit dans le passage (12) du fluide sous une pression égale au moins à 15 kg/cm² (1,4715 MPa).

## Patentansprüche

1. Verfahren zur Dichtung eines Fluidumdurchlasses durch Einbringen einer einen Gummilatex und ein bituminöses Material umfassenden Dichtmasse in den Durchlaß in Gegenwart eines Koagulationsmittels, dadurch gekennzeichnet, daß ein zweiter Durchlaß (17) gebildet wird, der den Fluidumdurchlaß (12) schneidet, und die Dichtmasse durch den zweiten Durchlaß (17) in den Fludiumdurchlaß (12) in zur Bildung eines Aggregates, das den Fluidumdurchlaß (12) in Anwesenheit des Koagulationsmittels wirkungsvoll abdichtet, ausreichender Menge eingebracht wird.

2. Verfahren nach Anspruch 1, dadurch gekennzeichnet, daß der zweite Durchlaß (17) den Fluidumdurchlaß (12) stromaufwärts von einer Öffnung im Fluidumdurchlaß (12) schneidet, wodurch ein durch den Fluidumdurchlaß (12) strömendes Fluidum die Masse entlang dem Fludumdurchlaß (12) über den Schnittpunkt zur Öffnung mitführt, wobei sich die Masse in oder hinter der Öffnung verfestigt und sie so abdichtet.

3. Verfahren nach Anspruch 1 oder 2, dadurch gekennzeichnet, daß die Masse in den Fluidumdurchlaß (12) mit einem Druck von zumindest 15 kg/cm² (1,4715 MPa) eingebracht wird.

FIG. 1

FIG. 2